(19) Europäisches Patentamt
European Patent Office
Office européen des brevets

(11) **EP 1 793 486 B1**

(12) **EUROPEAN PATENT SPECIFICATION**

(45) Date of publication and mention
of the grant of the patent:
**14.01.2009 Bulletin 2009/03**

(51) Int Cl.:
*H02P 6/16* *(2006.01)*     *H02P 6/18* *(2006.01)*
*G01P 3/44* *(2006.01)*     *G01P 13/04* *(2006.01)*

(21) Application number: **06024863.0**

(22) Date of filing: **01.12.2006**

(54) **Method for controlling ac motors**

Verfahren zum Regeln von Drehstrommotoren

Procède de commande de moteurs à courant alternatif

(84) Designated Contracting States:
**DE FR GB**

(30) Priority: **02.12.2005   JP 2005349333**

(43) Date of publication of application:
**06.06.2007   Bulletin 2007/23**

(73) Proprietor: **Fuji Electric FA Components &
Systems Co., Ltd.
Tokyo 141-0032 (JP)**

(72) Inventors:
• **Tajima, Hirokazu, c/o FUJI EL. FA COMPONENTS
Shinagawa-ku
Tokyo 141-0032 (JP)**
• **Hachisu, Yasuaki, c/o FUJI EL. FA COMPONENTS
Shinagawa-ku
Tokyo 141-0032 (JP)**

(74) Representative: **Hoffmann, Eckart
Bahnhofstrasse 103
82166 Gräfelfing (DE)**

(56) References cited:
**EP-A- 1 195 611          JP-A- 11 075 394**

**EP 1 793 486 B1**

**Description**

This invention relates to a method of controlling an AC motor in which variable-speed control of the AC motor is carried out while power is supplied to the AC motor from a variable-voltage variable-frequency inverter, and particularly to a method of deriving a rotary speed estimated value at the time of idling of the motor.

Japanese Patent No. 3,636,340 and US-A 6,060,860 (corresponding to JP-A-11-346500) discloses methods of controlling an AC motor when making a restart in the state where a variable-voltage variable-frequency inverter that drives the AC motor (hereinafter simply referred to as inverter) is stopped and the AC motor is idling, for example, when making a restart after recovery from a momentary service interruption of the input power source of the inverter such as a commercial power source.

In the control method Japanese Patent disclosed in No. 3,636,340 in which, when the AC motor is idling, at least one of semiconductor switching devices forming a main circuit of the inverter is turned on and off to generate a short circuit between windings of the motor, and an estimated value of the rotary speed of the motor is calculated from the winding current flowing at that time. Therefore, it can be applied to a synchronous motor having a permanent magnetic field or an induction motor in which a residual voltage exists, but it cannot be applied to an induction motor in which a residual voltage is attenuated.

In the control method disclosed in US-A 6,060,860 in which, when the AC motor is idling, an estimated value of the rotary speed of the motor is calculated from a voltage or current supplied from the inverter to the motor, if a residual voltage exists in the induction motor at that time, it affects the calculation of the rotary speed estimated value. Therefore, the calculation must be carried out after the residual voltage is sufficiently attenuated.

The document EP 1 195 611 A1 discloses a sensorless rotation state detection method for a synchronous motor comprising short-circuiting the respective phases of the motor while the motor is running idle for a detection period of a certain length and detecting the current in this detection period, comparing the detected current with a minimum value and extending the detection period if the detected current does not reach the minimum value with in the detection period. If the detected current does not reach the minimum value within a maximum detection period, the speed is judged to be zero. If the detected current does reach the minimum value the speed is calculated on the basis of the time the current required to reach the minimum value. This known method relies on the magnetic field of the rotor inducing a current in the stator unless the speed is zero and is, therefore, applicable to synchronous motors only.

It is an object of this invention to provide a method of controlling an AC motor that enables estimation of the rotary speed of the motor, even when the AC motor is idling.

This object is achieved by a method as claimed.

According to this invention, at least one of the semiconductor switching devices forming the main circuit of the inverter is turned on and off to generate a short circuit between windings of the motor, and the method for deriving a rotary speed estimated value for the motor is switched between the case where the winding current value flowing at the time is equal to or higher than a predetermined lower limit value and the case where the winding current value is less than the lower limit value.

BRIEF DESCRIPTION OF THE DRAWINGS

FIG. 1    is a circuit diagram showing an embodiment of this invention.

FIG. 2    is a flowchart for explaining the operation of FIG. 1.

FIG. 3    shows a waveform for explaining the operation of FIG. 2.

FIG. 4    shows a waveform for explaining the operation of FIG. 2.

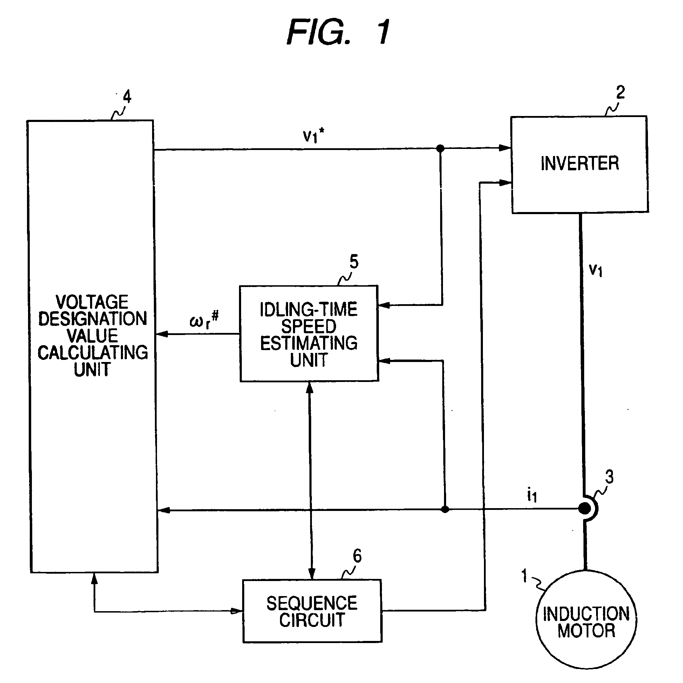

FIG. 1 is a circuit diagram showing an embodiment of this invention. Reference numeral 1 represents an induction motor as an AC motor, 2 represents an inverter that supplies a desired primary voltage ($v_1$) to the induction motor 1, 3 represents a current detector that detects a primary current ($i_1$) from the inverter 2 to the induction motor 1, 4 represents a voltage command value calculating unit that generates a voltage command value ($v_1$) for generating the above voltage $v_1$, 5 represents an idle-time speed estimating unit that calculates an estimated value ($\omega_r$#) of the rotary speed when the induction motor 1 is idling, and 6 represents a sequence circuit that commands the operations of the inverter 2, the voltage command value calculating unit 4, the idle-time speed estimating unit 5 and the like.

The voltage command value calculating unit 4 calculates each voltage command value in a d-q coordinate system from each current in the d-q coordinate system as a result of performing coordinate transformation of the current

$i_1$ of the induction motor 1 detected by the current detector 3 and a motor constant of the induction motor 1 on the basis of a primary angular frequency command value ($\omega_1$) of the induction motor 1 designated from outside or the like and a phase angle command value ($\theta_1$) acquired by time integration of $\omega_1$ as the normal operation of the induction motor 1 based on a sequence signal from the sequence circuit 6. The voltage command value calculating unit 4 generates the above-described voltage $v_1$ by coordinate transformation of these values based on the above value $\theta_1$.

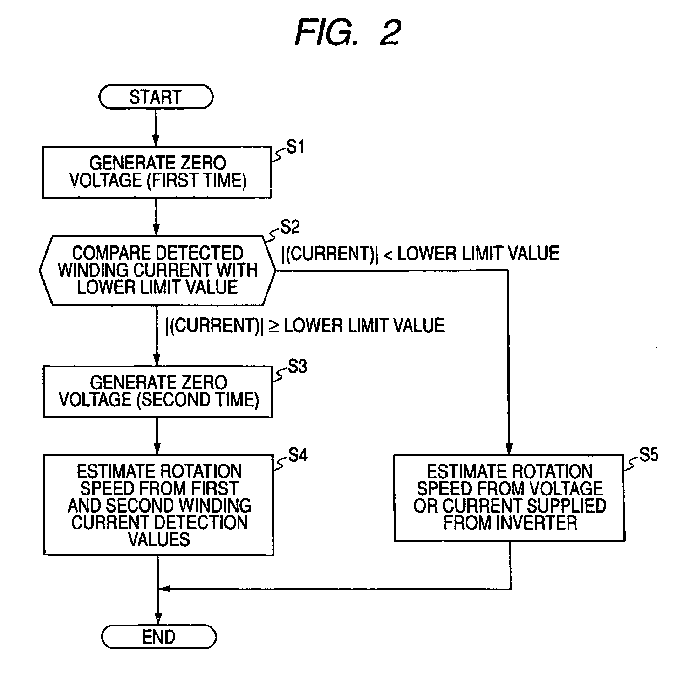

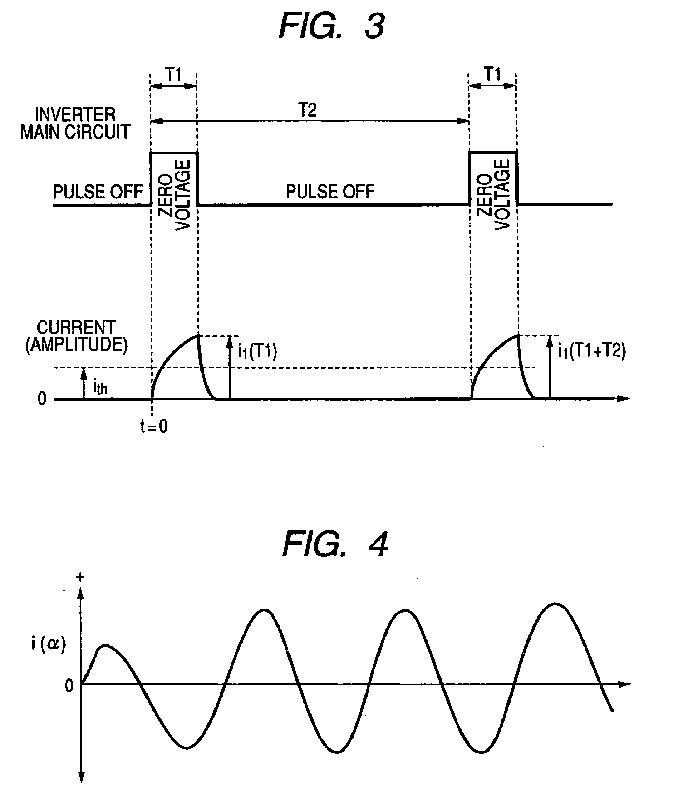

Next, a method for deriving the above value $\omega_r{}^\#$ when the induction motor 1 is idling will be described hereinafter with reference to the flowchart of the operation of the idle-time speed estimating unit 5 shown in FIG. 2 and the operation waveforms shown in FIG. 3 and FIG. 4.

In FIG. 2, for example, when the sequence circuit 6 detects a momentary service interruption of the input power source of the inverter 2, e.g., a commercial power source, and turns off the pulses of the main circuit of the inverter 2, and when then recover from this momentary service interruption is detected, at least one of the semiconductor switching devices of the main circuit is turned on and off to generate a short circuit in a stator winding (for example, each semiconductor switching device on the upper arm of the main circuit is turned on and each semiconductor switching device on the lower arm is turned off). Hereinafter, this state of these upper and lower arms is referred to as zero voltage (step S1). As the stator winding is short-circuited, a counter-electromotive force causes a current to flow through the winding. Therefore, a detection value $i_1$(T1) of the winding current of the induction motor 1, which is detected by the current detector 3 immediately before the lapse of a zero-voltage period T1, is stored, as shown in FIG. 3, and the relation between this value and a lower limit value $i_{th}$ is determined (step S2). When $i_1$(T1)$\geq i_{th}$ holds, the pulses of the main circuit of the inverter 2 are turned off and the processing shifts to step S3. When $i_1$(T1)$< i_{th}$ holds, the pulses of the main circuit of the inverter 2 are turned off and the processing shifts to step S5.

Next, in step S3, after the lapse of a period T2 from the occurrence of the previous (first) zero voltage, a zero voltage state is set again (second time). As shown in FIG. 3, a detection value $i_1$(T1+T2) of the winding current of the induction motor 1, which is detected by the current detector 3 immediately before the end of the second period of zero voltage, i.e., before T2 + T1 lapses, is stored (step S4). From the values acquired by converting the stored values $i_1$(T1) and $i_1$(T1+T2) to an $\alpha$-$\beta$ coordinate system, a current vector phase angle ($\Theta_1$) is calculated in accordance with the following equations (1) and (2).

$$\Theta_1(T1) = \tan^{-1}\{i_1\beta(T1)/i_1\alpha(T1)\} \qquad (1)$$

$$\Theta_1(T1+T2) = \tan^{-1}\{i_1\beta(T1+T2)/i_1\alpha(T1+T2)\} \qquad (2)$$

From equations (1) and (2), the estimated value ($\omega_r{}^\#$) of the rotary speed of the induction motor 1 at the time (T1+T2) is expressed by the following equation (3).

$$\omega_r{}^\#(T1+T2) = \{\Theta_1(T1+T2)-\Theta_1(T1)\}/T2 \qquad (3)$$

In step S5, the detection value $i_1$(T1) of the winding current of the induction motor 1 detected by the current detector 3 in the first zero-voltage period is less than the lower limit value $i_{th}$. As the estimated value ($\omega_r{}^\#$) of the rotary speed of the induction motor 1 is derived in accordance with equations (1) to (3) based on the current at the time of zero voltage, this value includes many errors. To avoid this, a voltage command value to supply a voltage or current to the induction motor 1 is newly generated for a predetermined period from the voltage command value calculating unit 4 to the inverter 2 in accordance with a command from the sequence circuit 6. Thus, the closed loop formed by the induction motor 1, the voltage command value calculating unit 4 and the inverter 2 is performs a self-excited oscillation. As the value acquired by conversion to the $\alpha$-$\beta$ coordinate system the detection value $i_1$ of the primary current of the induction motor 1 detected by the current detector 3 at that time, for example, one cycle of the sine-waveform of i($\alpha$) shown in FIG. 4, is measured, the measured value corresponds to the estimated value ($\omega_r{}^\#$) of the rotary speed of the induction motor 1 at that time.

That is, the primary voltage having the voltage and frequency based on the rotary speed estimated value for the induction motor 1 acquired by the idle-time speed estimating unit 5 when the induction motor 1 is idling is supplied to the induction motor 1 from the inverter 2, thereby enabling restart of the induction motor 1 without causing any shock.

In the above embodiment, the case of using the induction motor is described. However, also when a permanent magnet synchronous motor is used, the control method according to this invention enables restart of the synchronous motor at the time of idling without causing any shock.

**Claims**

1. A method of controlling an AC motor (1) in which a variable-speed control of the AC motor (1) is carried out while power is supplied to the AC motor (1) from a variable-voltage variable-frequency inverter (2), comprising:

   a) turning on and off at least one of semiconductor switching devices forming a main circuit of the inverter (2) to generate a short circuit a first time between windings of the motor when the motor (1) is idling;
   b) selecting one of two ways of deriving a rotary speed estimated value for the motor (1) depending on whether the winding current value flowing at that time is less than a predetermined lower limit value or not; and
   c) starting power supply from the inverter (2) to restart the motor (1) on the basis of the resultant rotary speed estimated value

   wherein step b) comprises

   - when the winding current value is equal to or higher than the predetermined lower limit value, turning the semiconductor switching device on and off again to generate a short circuit a second time between the windings of the motor (1), and deriving a rotary speed estimated value for the motor (1) on the basis of both winding current values detected at both short circuits, or,
   - when the winding current value is less than the predetermined lower limit value, deriving a rotary speed estimated value for the motor (1) on the basis of a voltage or current that is newly supplied to the motor (1) from the inverter (2) during the short circuit at the first time.

**Patentansprüche**

1. Verfahren zur Regelung eines Wechselstrommotors (1) bei dem eine variable Drehzahlregelung ausgeführt wird, während dem Wechselstrommotor (1) Leistung von einem Wechselrichter (2) variabler Spannung und variabler Frequenz zugeführt wird, umfassend:

   a) Ein- und Ausschalten wenigstens eines von Halbleiterschaltelementen, die eine Hauptschaltung des Wechselrichters (2) bilden, um ein erstes Mal einen Kurzschluß zwischen Wicklungen des Motors herzustellen, wenn der Motor (1) im Leerlauf ist;
   b) Auswählen eines von zwei Wegen zur Ableitung eines Drehzahlschätzwerts für den Motor (1) abhängig davon, ob der zu dem Zeitpunkt fließende Wicklungsstromwert kleiner als ein vorbestimmter unterer Grenzwert ist oder nicht; und
   c) Starten der Leistungsversorgung von dem Wechselrichter (2) zum Wiederanlaufenlassen des Motors (1) auf der Basis des resultierenden Drehzahlschätzwerts,
   wobei Schritt b) umfaßt

   - wenn der Wicklungsstromwert gleich oder höher ist als der vorbestimmte untere Grenzwert, erneutes Ein- und Ausschalten des Halbleiterschaltelements, um ein zweites Mal einen Kurzschluß zwischen den Wicklungen des Motors (1) zu erzeugen, und Ableiten eines Drehzahlschätzwerts für den Motor (1) auf der Basis der beiden Wicklungsstromwerte, die bei den beiden Kurzschlüssen ermittelt wurden, oder
   - wenn der Wicklungsstromwert kleiner ist als der vorbestimmte untere Grenzwert, Ableiten des Drehzahlschätzwerts für den Motor (1) auf der Basis einer Spannung oder eines Stroms, die bzw. der dem Motor (1) von dem Wechselrichter (2) während des erstmaligen Kurzschlusses erneut geliefert wird.

**Revendications**

1. Procédé de commande d'un moteur à courant alternatif, dans lequel on effectue une commande de vitesse variable du moteur (1) à courant alternatif, tout en envoyant du courant au moteur (1) à courant alternatif à partir d'un onduleur (2) de tension variable et de fréquence variable, dans lequel :

   a) on ouvre et on ferme au moins l'un des dispositifs de commutation à semi-conducteurs formant un circuit principal de l'onduleur (2) pour engendrer un court-circuit une première fois entre des enroulements du moteur lorsque le moteur (1) est au repos ;
   b) on sélectionne l'une des deux voies de déduction d'une valeur estimée de la vitesse de rotation du moteur (1) suivant que la valeur du courant dans l'enroulement passant à cet instant est inférieure à une valeur limite intérieure déterminée à l'avance ou ne l'est pas ;
c) on fait débuter une alimentation en courant par l'onduleur (2) pour refaire démarrer le moteur (1) sur la base de la valeur estimée de la vitesse de rotation obtenue

dans lequel dans le stade b)

- lorsque la valeur du courant dans l'enroulement est supérieure ou égale à la valeur limite inférieure déterminée à l'avance, on rouvre et referme le dispositif de commutation à semi-conducteurs pour produire un court-circuit une deuxième fois entre les enroulements du moteur (1) et on déduit une valeur estimée de la vitesse de rotation du moteur (1) sur la base des deux valeurs de courant dans l'enroulement détectées aux deux courts-circuits ou,
- lorsque la valeur du courant dans l'enroulement est plus petite que la valeur limite intérieure déterminée à l'avance, on déduit une valeur estimée de la vitesse de rotation du moteur (1), sur la base d'une tension ou d'un courant qui est nouvellement fourni au moteur (1) à partir de l'onduleur (2) pendant le court-circuit la première fois.

# FIG. 1

# FIG. 2

```
          ┌──────────────┐
          │    START     │
          └──────┬───────┘
                 │
                 ▼
    ┌─────────────────────────┐  ⟋S1
    │    GENERATE ZERO         │
    │  VOLTAGE (FIRST TIME)    │
    └────────────┬────────────┘
                 │
                 ▼                         ⟋S2
    ╱─────────────────────────╲   |(CURRENT)| < LOWER LIMIT VALUE
   ╱  COMPARE DETECTED         ╲ ─────────────────────────────────┐
   ╲  WINDING CURRENT WITH     ╱                                   │
    ╲    LOWER LIMIT VALUE    ╱                                    │
     ╲───────────┬──────────╱                                     │
                 │                                                 │
       |(CURRENT)| ≥ LOWER LIMIT VALUE                             │
                 │                                                 │
                 ▼                                                 │
    ┌─────────────────────────┐  ⟋S3                              │
    │    GENERATE ZERO         │                                  │
    │  VOLTAGE (SECOND TIME)   │                                  │
    └────────────┬────────────┘                                  │
                 │                                                │
                 ▼                                                ▼
    ┌─────────────────────────┐  ⟋S4       ┌─────────────────────────┐  ⟋S5
    │  ESTIMATE ROTATION       │            │   ESTIMATE ROTATION      │
    │  SPEED FROM FIRST        │            │  SPEED FROM VOLTAGE      │
    │  AND SECOND WINDING      │            │  OR CURRENT SUPPLIED     │
    │  CURRENT DETECTION       │            │    FROM INVERTER         │
    │       VALUES             │            └────────────┬────────────┘
    └────────────┬────────────┘                         │
                 │                                       │
                 ◄───────────────────────────────────────┘
                 │
                 ▼
          ┌──────────────┐
          │     END      │
          └──────────────┘
```

7

# FIG. 3

# FIG. 4

**REFERENCES CITED IN THE DESCRIPTION**

**Patent documents cited in the description**

- JP 3636340 B
- US 6060860 A
- JP 11346500 A
- EP 1195611 A1